Europäisches Patentamt

European Patent Office

Office européen des brevets

(11) Veröffentlichungsnummer: **0 340 334**
**A2**

(12) **EUROPÄISCHE PATENTANMELDUNG**

(21) Anmeldenummer: 88114509.8

(51) Int. Cl.4: **B29C 65/08 , B31F 5/00**

(22) Anmeldetag: 06.09.88

(30) Priorität: 05.05.88 DE 3815267

(43) Veröffentlichungstag der Anmeldung:
08.11.89 Patentblatt 89/45

(84) Benannte Vertragsstaaten:
AT BE CH DE ES FR GB GR IT LI LU NL SE

(71) Anmelder: DRESCHER GESCHÄFTSDRUCKE GMBH

D-7255 Rutesheim(DE)

(72) Erfinder: Der Erfinder hat auf seine Nennung verzichtet

(74) Vertreter: Hoeger, Stellrecht & Partner
Uhlandstrasse 14 c
D-7000 Stuttgart 1(DE)

(54) Vorrichtung zum Verbinden von zwei- oder mehrlagigen Papiererzeugnissen.

(57) Um bei einer Vorrichtung zum Verbinden von zwei- oder mehrlagigen, mit einer thermoplastischen Beschichtung versehenen Papiererzeugnissen mit einer eine Transportbahn definierenden Transportvorrichtung für die Papiererzeugnisse und einer Heftvorrichtung zum Verbinden der Papierlagen den konstruktiven Aufbau zu vereinfachen und insbesondere die Wärmeabstrahlung zu verringern, wird vorgeschlagen, daß die Heftvorrichtung (14) einen Ultraschallkopf (26, 26') und eine dem Ultraschallkopf (26, 26') zugeordnete Auflage (28, 28') umfaßt, wobei der Ultraschallkopf (26, 26') und die Auflage (28, 28') auf gegenüberliegenden Seiten der Transportbahn angeordnet sind und einen Durchlaß für die Papiererzeugnisse (16) bilden.

FIG.2

## Vorrichtung zum Verbinden von zwei- oder mehrlagigen Papiererzeugnissen

Die Erfindung betrifft eine Vorrichtung zum Verbinden von zwei- oder mehrlagigen, mit einer thermoplastischen bzw. thermoplastifizierbaren Beschichtung versehenen Papiererzeugnissen mit einer eine Transportbahn definierenden Transportvorrichtung für die Papiererzeugnisse und einer Heftvorrichtung zum Verbinden der Papierlagen in den vorgesehenen Heftbereichen.

Die Erfindung betrifft insbesondere eine Vorrichtung zum Verbinden von zwei- oder mehrlagigen Papiererzeugnissen, zum Beispiel auf der inneren Beschichtungsseite beschriftete Einblattbriefe, Faltblätter, Formulare und dergleichen.

Die bekannten Vorrichtungen dieser Art führen die zwei- oder mehrlagigen Papiererzeugnisse zunächst durch eine Heizzone, in der der Thermoplast auf Schmelztemperatur gebracht wird und anschließend zwischen Druckwalzen, die zu einer intensiven Klebverbindung der Papierlagen miteinander führen.

Die Qualität der Verklebung der Papierlagen miteinander ist bei den bekannten Vorrichtungen davon abhängig, ob das Papiererzeugnis eine ausreichende Aufheiztemperatur erreicht hat.

Um dies sicherzustellen, sind regelmäßig längere Vorwärmstrecken erforderlich, da die Temperatur in der Heizzone nicht beliebig gesteigert werden kann. Dies bedingt, daß bekannte Vorrichtungen entweder relativ groß bauen, oder aber nur für wenige und/oder dünne Papierlagen geeignet sind. Ein Problem bei der Verwendung solcher Vorrichtungen in normalen Büroräumen ist auch die Wärmeabstrahlung, die durch die Heizzone in dem Gerät erzeugt wird. Vor allem bei mehrlagigen Papiererzeugnissen ist es schwierig, die Vorrichtung, d. h. Druck- und Transportgeschwindigkeit der Papiererzeugnisse so einzustellen, daß eine sichere Verheftung erreicht wird.

Besonders problematisch sind nicht ausreichende Verheftungen bei sogenannten Einblattbriefen, in denen persönliche Daten, beispielsweise Lohnabrechnungen u.ä. versandt werden, da sie bei vorsichtiger und geschickter Manipulation nachträglich unbemerkbar geöffnet und wieder geschlossen werden können, so daß eine Geheimhaltung der auf der Innenseite der Papierlagen befindlichen Daten nicht gewährleistet ist.

Demgegenüber stellt sich die vorliegende Erfindung die Aufgabe, eine konstruktiv einfachere Vorrichtung mit einer geringeren Wärmeabstrahlung vorzuschlagen, bei der außerdem eine einfachere Einstellung auf Papierstärken und/oder zusätzliche Papierlagen möglich ist.

Diese Aufgabe wird bei einer Vorrichtung der eingangs beschriebenen Art erfindungsgemäß dadurch gelöst, daß die Heftvorrichtung einen Ultraschallkopf und eine dem Ultraschallkopf zugeordnete Auflage umfaßt,. wobei der Ultraschallkopf und die Auflage auf gegenüberliegenden Seiten der Transportbahn angeordnet sind und einen Durchlaß für die Papiererzeugnisse bilden.

Durch die Verwendung eines Ultraschallkopfes entfällt die bei dem Stand der Technik notwendige Vorwärmstrecke oder Heizzone, da hier die Temperatur im Mikrobereich durch das Schwingen des Ultraschallkopfs direkt an den Klebe- oder Verbindungsstellen erzeugt wird. Gleichzeitig wird mit dem Ultraschallkopf, der sich gegen die ihm zugeordnete Auflage bewegt, Druck ausgeübt, so daß die übereinanderliegenden und zu verheftenden Papierlagen in intensiven Kontakt kommen, wobei die Faservliese der aufeinanderliegenden Papierlagen zumindest im Oberflächenbereich partiell ineinander eindringen.

Diese intensive Verklebung ist bereits häufig ausreichend, um sicherzustellen, daß die Heftstelle des Papiererzeugnisses nicht unbemerkbar geöffnet und wieder verschlossen werden kann.

Über die einstellbare, dem Ultraschallkopf zuführbare Energie kann gleichzeitig die Intensität der Verheftung eingestellt oder aber die Vorrichtung für zusätzliche Papierlagen umgestellt werden.

Um den Ultraschallkopf mit einer möglichst geringen Leistung betreiben zu können, wird die dem Ultraschallkopf zugewandte Fläche der Auflage gekrümmt ausgeführt, so daß sich beim Zusammentreffen von Ultraschallkopf und Auflage eine höhere Energiedichte ergibt.

Zweckmäßigerweise wird die Auflage als ein Rad ausgebildet, das in Transportrichtung der Papiererzeugnisse drehbar befestigt ist. Hierbei kann vorgesehen sein, daß das Auflage- oder Amboßrad als Prägerad ausgebildet ist. Die Muster im Prägerad, d. h. Vertiefungen und Prägeerhebungen werden vorzugsweise als Stege und/oder Punkte oder kreuz-oder wellenlinienförmig ausgebildet. Die so verklebten Schließbereiche der Papiererzeugnisse erhalten dadurch ein wasserzeichenartiges Aussehen, da die Bereiche, die auf den Prägeerhebungen des Prägerades aufliegen, stärker miteinander verpreßt werden und ein leicht anderes, unter Umständen etwas transparenteres Aussehen erhalten als die Bereiche, die im Bereich der Vertiefungen des Prägerades die Heftvorrichtung passieren. Diese wasserzeichenartigen Bereiche im Schließbereich des Papiererzeugnisses verfliessen, wenn versucht wird, durch Erhitzen das Papiererzeugnis zu öffnen. Hierdurch ist eine weitere Sicherung gegen unbefugtes Öffnen eingebaut.

Die Prägeerhebungen des Prägerades können beispielsweise auch in Form von Zahlen oder Buchstabensymbolen ausgebil det sein, so daß sich in den Schließbereich des Papiererzeugnisses zusätzlich Kontrollinformationen einprägen lassen.

Eine weitere Verbesserung in Bezug auf einen Schutz gegen unbefugtes Öffnen erfahren Papiererzeugnisse dann, wenn sie von einer Vorrichtung verschlossen sind, bei der das Auflagerad Schneidkanten umfaßt, die beim Durchlaufen des Papiererzeugnisses durch die Heftvorrichtung Perforationen oder Sollreißschnittstellen erzeugen. Die Erzeugung von Perforationen hat den Vorteil, daß der Empfänger den Brief leicht an diesen Perforationslinien aufreißen kann. Bei einem unbefugten Versuch, die Schließstelle zu öffnen, erhöhen die Perforationen jedoch die Gefahr, daß das Papier einreißt, so daß die unbefugte Öffnung nicht unbemerkt bleibt. Einen noch besseren Schutz erhält man hier mit Sollreißstellen, die so angelegt sind, daß bei einem Trennen der verhefteten Papierlagen mit Sicherheit ein Einreißen der seitlichen Kanten der Papierlagen erfolgt, was sich beim Schließen nicht wieder rückgängig machen läßt.

Eine besonders intensive Verheftung der Papierlagen miteinander wird dann erhalten, wenn der Ultraschallkopf an seinem der Auflage zugewandten Ende eine gekrümmte Oberfläche aufweist. Zweckmäßigerweise sind dann hierbei der Ultraschallkopf und die Auflage so angeordnet, daß sie einen sich stromaufwärts erweiternden Führungsspalt oder eine sogenannte Einlaufschräge bilden.

Besonders hohe Energiedichten sind im Bereich der Heft stelle dann zu erreichen, wenn die gekrümmte Oberfläche des Ultraschallkopfs die Form einer Kugelkalotte aufweist.

Zweckmäßigerweise wird der Ultraschallkopf einen stabförmigen Schwingerkopf umfassen, der vorzugsweise eine sich zum freien Ende hin verjüngende Form aufweist.

Bei einer bevorzugten Ausführungsform der Erfindung wird der Ultraschallkopf und die Auflage lediglich am Randbereich der Transportbahn angeordnet, so daß nur der Randbereich der Papiererzeugnisse von der Heftvorrichtung erfaßt wird. In einer Reihe von Fällen kann es ausreichend sein, einen Einblattbrief oder auch andere mehrlagige Papiererzeugnisse nur an einer Kante oder einem Schließbereich miteinander zu verheften, insbesondere dann, wenn es nicht um die Gewährleistung von Datensicherheit geht, sondern im Vordergrund lediglich die Verbindung der Papierlagen miteinander steht.

Beim Verschließen von Briefen, die Informationen beinhalten, die lediglich dem Empfänger bekannt werden dürfen, empfiehlt es sich, beidseits der Transportbahn jeweils einen Ultraschallkopf und eine Auflage anzuordnen. Die beidseitig verschlossenen Papiererzeugnisse bieten auch für diese Produkte eine ausreichende Sicherheit.

Vorzugsweise sind die Abstände zwischen den Ultraschallköpfen einerseits und zwischen den Auflagen andererseits einstellbar, wodurch sich die Vorrichtung auf unterschiedlich große bzw. breite Papiererzeugnisse einstellen läßt.

Gleichfalls empfiehlt es sich, den Abstand zwischen dem Ultraschallkopf und der ihm zugeordneten Auflage einstellbar zu gestalten, da damit eine bessere Anpassung des Geräts an zusätzliche Papierlagen möglich ist.

Vorzugsweise wird die Transportvorrichtung mit einem Transportband ausgerüstet, das im Bereich der Heftvorrichtung über eine Umlenkwalze umgelenkt wird.

Eine verbesserte Führung erhalten die Papiererzeugnisse in der Transportvorrichtung dann, wenn oberhalb der Transportebene ein zweites Transportband angeordnet ist, wobei dann die beiden Transportbänder die Papiererzeugnisse zwischen sich halten und führen.

Die Umlenkwalze des Transportbandes wird vorzugsweise koaxial mit dem Auflagerad oder den Auflagerädern angeordnet. Es hat sich hierbei als zweckmäßig erwiesen, die Umlenkwalze und die Auflageräder drehfest auf einer gemeinsamen Welle anzuordnen, wobei die Durchmesser der Auflageräder und der Umlenkwalze im wesentlichen gleich groß sind.

Der Ultraschallkopf ist vorzugsweise mit einer Frequenz antreibbar, bei der ein Schmelzen der thermoplastischen Beschichtung erfolgt.

Der vorzugsweise mit einer Frequenz von beispielsweise 40 - 60 kHz betreibbare Ultraschallkopf kann mit seiner Leistung beim Verheften der Papierlagen auf unterschiedliche Papiererzeugnisse über die ihm zugeführte Energie eingestellt werden. Dies ermöglicht eine besonders leichte Anpassung der Vorrichtung an verschiedene, insbesondere zusätzliche Papierlagen enthaltende Papiererzeugnisse.

Bevorzugt wird die Schwingungsamplitude des Ultraschallkopfes oder des Schwingerkopfs in Richtung zur Transportbahn, d.h. also in Richtung zur Auflage hin mindestens 150 µm betragen. Eine solche Schwingungsamplitude stellt zum einen eine ausreichende Verdichtung der Papierlagen und eine dementsprechend intensive Verheftung und ein Ineinanderdringen der Faservliese sicher und garantiert gleichzeitig eine ausreichend hohe Wärmeentwicklung im Mikrobereich der Klebeschichten.

Bei der Einstellung des Spalts zwischen dem Ultraschallkopf und dem Prägerad oder allgemein der Auflage wird vorzugsweise ein mittlerer Abstand oder eine mittlere Spalthöhe gewählt, die kleiner ist als die Dicke der ungepreßten Papierlagen.

Die erfindungsgemäße Vorrichtung läßt sich wegen ihrer einfachen und unkomplizierten Konstruktion als Bürogerät ausgestalten und auch im Bürobereich betreiben, da sie sehr kompakt gestaltet werden kann und nur mit geringem Geräuschpegel arbeitet.

Eine solche Vorrichtung ist insbesondere auch im Zusammenhang mit der Benutzung von Laserprintern geeignet, die ebenfalls wegen ihrer geringen Geräuschentwicklung in Büros aufgestellt werden können und wegen ihrer hohen Druckgeschwindigkeit für Serienbriefe geeignet sind.

Man kann deshalb im Büro, d.h. ohne gesonderten Post- oder Druckerraum eine Druckstation aufstellen und diese über eine mechanische Papierbehandlungsstation, die beispielsweise Einblattbriefe falzt, mit der erfindungsgemäßen Vorrichtung zum Verheften der Papierlagen verbinden, wobei auf kleinem Raum vom Druck der Information bis zum versandfertigen Brief sämtliche dafür notwendigen Geräte untergebracht werden können.

Diese und weitere Vorteile der Erfindung werden im folgenden anhand der Zeichnung noch näher erläutert. Es zeigen im einzelnen:

Fig. 1 Eine schematische Seitenansicht einer erfindungsgemäßen Vorrichtung;

Fig. 2 eine Ansicht der Vorrichtung von Fig. 1 in Richtung des Pfeiles A in Fig. 1;

Fig. 3 eine vergrößerte Schnittansicht mit einem Ultraschallkopf und einem Amboßrad; und

Fig. 4a, b und c verschiedene Ausführungsformen eines Amboßrades.

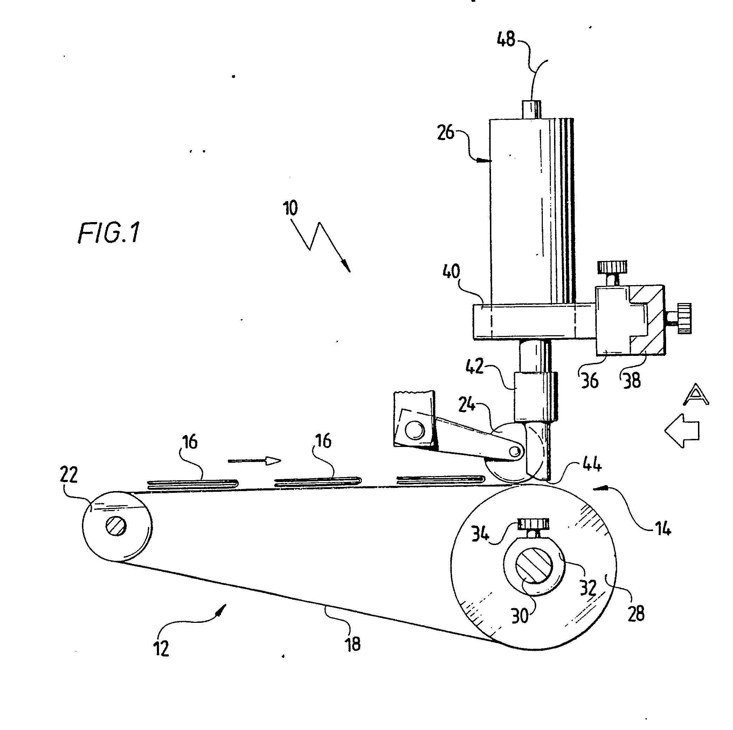

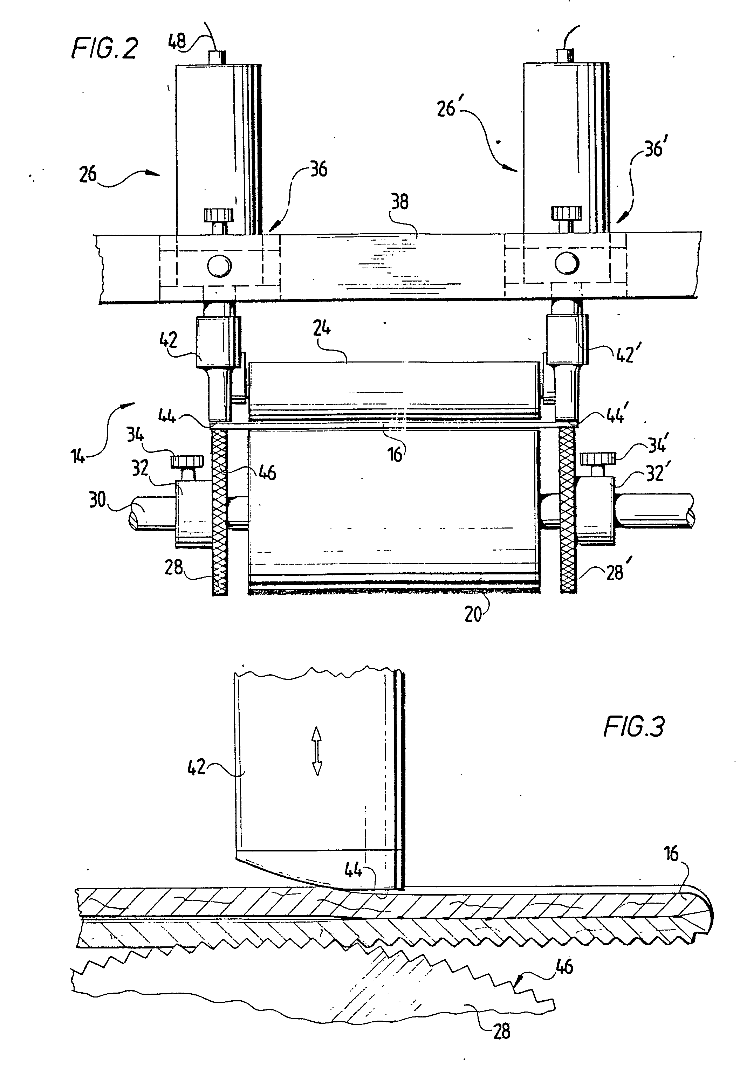

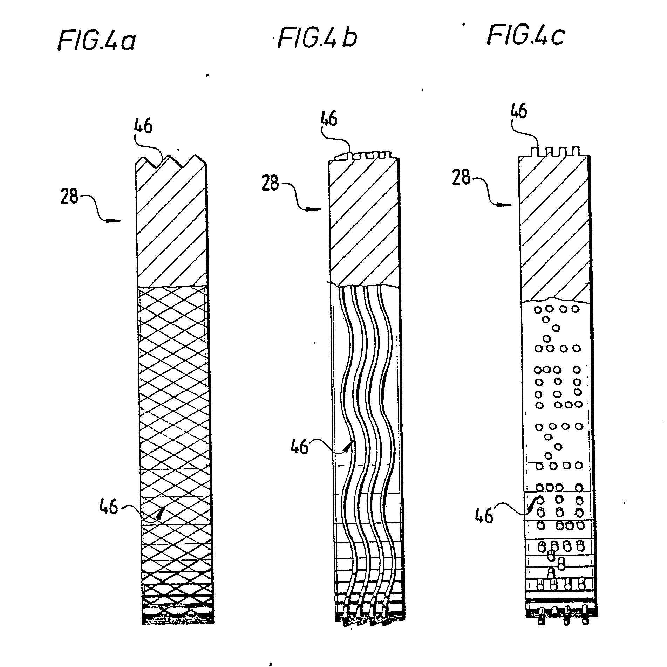

In Fig. 1 ist schematisch eine erfindungsgemäße Vorrichtung insgesamt mit dem Bezugszeichen 10 bezeichnet. Diese Gesamtvorrichtung setzt sich im wesentlichen aus einer Transportvorrichtung 12 und einer Heftvorrichtung 14 zusammen. Die Transportvorrichtung 12 für Papiererzeugnisse 16 wird hierbei im wesentlichen aus einem Transportband 18, das über Umlenkwalzen 20, 22 geführt ist, gebildet. Um die Zuführung der Papiererzeugnisse 16 in die Heftvorrichtung 14 zu erleichtern, ist oberhalb der Umlenkwalze 20, die das Transportband 18 im Bereich der Heftvorrichtung 14 umlenkt, eine Anpreßwalze 24 vorgesehen, die mit ihrem Umfang auf dem Transportband 18 bzw. auf den der Heftvorrichtung 14 zuzuführenden Papiererzeugnissen 16 aufliegt.

Die Heftvorrichtung 14 erfaßt bei der erfindungsgemäßen Vorrichtung 10 einen Ultraschallkopf 26 sowie eine diesem zugeordnete Auflage 28, die hier in Form eines Amboßrades ausgebildet ist. Die Auflage oder das Amboßrad 28, 28′ ist bei den in Fig. 1 und 2 gezeigten Ausführungsbeispielen koaxial zu der Umlenkwalze 22 angeordnet und drehfest mit diesem auf einer Antriebswelle 30 gehalten. Dadurch wird das Transportband 18 synchron mit dem Amboßrad 28 bzw. den Amboßrädern 28, 28′ angetrieben, die beidseits der Umlenkwalze 20 mit einem gewissen seitlichen Abstand hierzu angeordnet sind. Die Amboßräder 28, 28′ weisen auf ihrer der Umlenkwalze 20 gegenüberliegenden Seite einen Ringflansch 32, 32′ auf, in die eine Feststellschraube 34, 34′ eingeschraubt werden kann. Dadurch ist die Möglichkeit gegeben, den Abstand der Heftstellen auf dem Papiererzeugnis einzustellen oder aber die Breite der Heftvorrichtung auf das Papiererzeugnis selbst einzujustieren.

Die zugehörigen Ultraschallköpfe 26, 26′, die im selben Abstand zueinander wie die zugehörigen Amboßräder 28, 28′ angeordnet sind, werden vorzugsweise über einen Schlitten 36, 36′ an einer Schiene 38 gehalten. Die parallel zum Obertrumm des Transportbandes 18 und quer zur Transportrichtung angeordnete Schiene 38 erlaubt eine Verstellung der Ultraschallköpfe 26, 26′ entsprechend der Verstellmöglichkeit der Amboßräder 28, 28′. Der Ultraschallkopf 26, 26′ ist dabei über eine Halterung 40, 40′ lösbar an dem Schlitten 36 befestigt und kann so leicht ausgetauscht und gewartet werden.

Die Ultraschallköpfe werden bevorzugt mit einer Schwingungsfrequenz von beispielsweise 40 - 60 kHz betrieben und die Schwingungsamplitude wird bevorzugt mindestens 150 μm betragen. Das hierfür erforderliche Treibersignal wird den Ultraschallköpfen 26, 26′ über die Zuleitungen 48, 48′ zugeführt.

Bei einer bevorzugten Ausführungsform ist vorgesehen, daß der Abstand zwischen dem Ultraschallkopf 26, 26′ und dem jeweils zugehörigen Amboßrad 28, 28′ einstellbar ist, so daß verschieden dicke Papiererzeugnisse in gleich guter Qualität verarbeitet werden können.

Der Ultraschallkopf 26, 26′ umfaßt einen Schwingerkopf 42, 42′ auf der sich zu seinem freien, dem Amboßrad 28, 28′ gegenüberliegenden Ende hin verjüngt und in eine gekrümmte Oberfläche 44, 44′ ausläuft. Die Krümmung der Oberfläche 44, 44′ ist dabei so gewählt, daß sich der Spalt zwischen dem Amboßrad 28, 28′ und dem Schwingerkopf 42, 42′ in einer Richtung entgegen der Transportrichtung der Papiererzeugnisse erweitert, so daß dadurch eine Einführschräge gebildet wird. Durch das Anpressen der Papiererzeugnisse auf das Transportband 18 im mittleren Bereich der Papiererzeugnisse wird sichergestellt, daß die zwei- oder mehrlagigen Papiererzeugnisse sicher in diese Einführspalte zwischen Schwingerkopf und Amboßrad eingeführt werden.

Fig. 3 zeigt eine schematische, vergrößerte Darstellung eines Schwingerkopfs 42 und dem gegenüberliegenden Amboßrad 28 samt einem dazwischen angeordneten Papiererzeugnis 16. Die Schwingungsamplitude des Schwingerkopfs 42 ist im wesentlichen radial zu dem Amboßrad 28 ausgerichtet. Durch das Zusammenpressen des zweilagigen Papiererzeugnisses 16 zwischen dem Schwingerkopf 42 und dem Amboßrad 28 word die Struktur 46 an der Oberfläche des Amboßrades 28 auf die eine Oberfläche des Papiererzeugnisses 16 im Heftbereich übertragen.

Die Fig. 4a bis c zeigen verschiedene Beispiele für eine Oberflächenstruktur auf der umfangsmäßigen Oberfläche der Amboßräder 28, 28', die beispielsweise in Fig, 4a in einer Kreuzbandstruktur oder die in Fig. 4b in einer wellenlinienartigen Struktur bestehen kann. Eine besonders vorteilhafte Struktur ist beispielhaft in Fig. 4c gezeigt, wo punktartige Erhebungen auf der umfangsmäßigen Oberfläche des Amboßrades 28 zur Bildung von Buchstaben und Zahlen oder sonstigen Symbolkombinationen ausgenutzt werden, so daß dem Heft- oder Verschließbereich des Papiererzeugnisses 16 zusätzlich bestimmte Informationen aufgeprägt werden können.

Durch die Ausbildung einer Struktur 46 auf der Umfangsfläche der Amboßräder 28, 28' wird zudem die Fläche vermindert, auf die sich der Anpreßdruck des Schwingerkopfes 42 verteilt, so daß sich eine erhöhte Energiedichte im Bereich dieser Prägeerhebungen ergibt. Dies hat eine besonders intensive Verbindung der Papierlagen des Papiererzeugnisses 16 gerade in diesen Bereichen zur Folge, was wiederum die Qualität des Heft- oder Schließbereichs der Papierlagen verbessert.

Bei der erfindungsgemäßen Vorrichtung werden die bereits gefalteten Papiererzeugnisse 16 über die Transportvorrichtung 12 in Richtung des Pfeiles in Fig. 1 zur Heftvorrichtung 14 befördert. Im Bereich der Heftvorrichtung 14 übernimmt zusätzlich die Anpreßwalze 24, deren Breite im wesentlichen der Breite des Transportbandes 18 entspricht, die Führung der Papiererzeugnisse 16 und ermöglicht insbesondere ein problemloses Einfädeln der zu verschließenden Ränder des Papiererzeugnisses 16 in die aus Ultraschallkopf 26, 26' und Amboßrad 28 bzw. 28' gebildeten Spalte.

Der mit Ultraschallfrequenz betriebene Ultraschallkopf (beispielsweise 40 - 60 kHz) erzeugt durch die sehr schnelle Auf- und Abbewegung im Mikrobereich eine Temperaturerhöhung, die den thermoplastischen Kleber, der auf der Innenseite der Papierlagen aufgebracht ist, zum Schmelzen bringt. Durch die gleichzeitige Ausübung des Druckes werden die Papierlagen miteinander verpreßt, wobei insbesondere eine Oberflächenstruktur auf der Umfangsfläche der Prägeräder 28, 28' ein intensives Ineinanderdringen zumindest der Oberflächenbereiche der beiden aufeinanderliegenden Faservliese bewirkt. Auch die Thermoplastanteile werden hierbei in die Papierlagen hineingepreßt, wodurch sich wasserzeichenähnliche Effekte in den Schließbereichen der Papiererzeugnisse 16 erzeugen lassen.

Bei einem unbefugten Versuch, die so verschlossenen Papiererzeugnisse zu öffnen, wird entweder ein Einreißen der Papierlagen erfolgen, oder aber - bei dem Versuch durch Erwärmung der Erzeugnisse - der wasserzeichenähnliche Effekt verschwinden.

Dadurch erhält man Papiererzeugnisse, die ganz besonders gegen ein unbefugtes, unbemerkbares Öffnen gesichert sind.

Wie bereits zuvor beschrieben, können auf dem Amboßrad zusätzlich Schneidteile oder Schneidkanten angeordnet sein, die in regelmäßigen Abständen Perforationen oder Sollreißschnittstellen in den Papierschichten erzeugen, die eine mechanische Trennung ohne ein entsprechendes Einreißen der Papierlagen nicht mehr ermöglichen. Zum Erleichtern des befugten Öffnens der so erhaltenen Papiererzeugnisse können gleichfalls parallel zu den Verschlußbereichen des Papiererzeugnisses Perforationen aufgebracht werden, die ein einfaches Abreißen dieser Bereiche und damit ein leichtes Öffnen durch den befugten Empfänger erlauben.

## Ansprüche

1. Vorrichtung zum Verbinden von zwei- oder mehrlagigen, mit einer thermoplastischen Beschichtung versehenen Papiererzeugnissen mit einer eine Transportbahn definierenden Transportvorrichtung für die Papiererzeugnisse und einer Heftvorrichtung zum Verbinden der Papierlagen, dadurch gekennzeichnet, daß die Heftvorrichtung (14) einen Ultraschallkopf (26, 26') und eine dem Ultraschallkopf (26, 26') zugeordnete Auflage (28, 28') umfaßt, wobei der Ultraschallkopf (26, 26') und die Auflage (28, 28') auf gegenüberliegenden Seiten der Transportbahn angeordnet sind und einen Durchlaß für die Papiererzeugnisse (16) bilden.

2. Vorrichtung nach Anspruch 1, dadurch gekennzeichnet, daß die dem Ultraschallkopf (26, 26') zugewandte Fläche der Auflage (28, 28') gekrümmt ist.

3. Vorrichtung nach Anspruch 1 oder 2, dadurch gekennzeichnet, daß die Auflage (28, 28') ein in Transportrichtung der Papiererzeugnisse (16) drehbar befestigtes Rad ist.

4. Vorrichtung nach Anspruch 3, dadurch gekennzeichnet, daß das Rad ein Prägerad (28, 28') ist.

5. Vorrichtung nach Anspruch 4, dadurch gekennzeichnet, daß das Prägerad (28, 28') Vertiefungen und Prägeerhebungen (46) aufweist, die als Stege, Punkte, kreuz-und/oder wellenförmige Strukturen ausgebildet sind.

6. Vorrichtung nach Anspruch 4, dadurch gekennzeichnet, daß das Prägerad (28, 28') Prägeerhebungen in Form von Zahlen und Buchstaben umfaßt.

7. Vorrichtung nach einem oder mehreren der Ansprüche 4 bis 6, dadurch gekennzeichnet, daß das Rad (28, 28') Schneidkanten zur Erzeugung von Perforationen und/oder Sollreißschnittstellen umfaßt.

8. Vorrichtung nach einem oder mehreren der voranstehenden Ansprüche, dadurch gekennzeichnet, daß der Ultraschallkopf (26, 26') an seinem der Auflage (28, 28') zugewandten Ende eine gekrümmte Oberfläche (44, 44') aufweist, wobei vorzugsweise der Ultraschallkopf (26, 26') und die Auflage (28, 28') einen sich stromaufwärts erweiternden Führungsspalt für die Papiererzeugnisse (16) bilden.

9. Vorrichtung nach Anspruch 8, dadurch gekennzeichnet, daß die gekrümmte Oberfläche (44, 44') des Ultraschallkopfs (26, 26') die Form einer Kugelkalotte aufweist.

10. Vorrichtung nach einem oder mehreren der voranstehenden Ansprüche, dadurch gekennzeichnet, daß der Ultra schallkopf (26, 26') einen stabförmigen Schwingerkopf (42, 42') umfaßt.

11. Vorrichtung nach Anspruch 10, dadurch gekennzeichnet, daß der Schwingerkopf (42, 42') eine sich zum freien Ende hin verjüngende Form aufweist.

12. Vorrichtung nach einem oder mehreren der voranstehenden Ansprüche, dadurch gekennzeichnet, daß der Ultraschallkopf (26, 26') und die Auflage (28, 28') lediglich am Randbereich der Transportbahn angeordnet sind, so daß nur der Randbereich der Papiererzeugnisse (16) verheftbar ist.

13. Vorrichtung nach Anspruch 12, dadurch gekennzeichnet, daß beidseits der Transportbahn jeweils ein Ultraschallkopf (26, 26') und eine Auflage (28, 28') angeordnet sind.

14. Vorrichtung nach Anspruch 13, dadurch gekennzeichnet, daß die Abstände zwischen den Ultraschallköpfen (26, 26') und zwischen den Auflagen (28, 28') jeweils einstellbar sind.

15. Vorrichtung nach einem oder mehreren der voranstehenden Ansprüche, dadurch gekennzeichnet, daß der Abstand zwischen dem Ultraschallkopf (26, 26') und der zugeordneten Auflage (28, 28') einstellbar ist.

16. Vorrichtung nach einem oder mehreren der voranstehenden Ansprüche, dadurch gekennzeichnet, daß die Transportvorrichtung (12) ein Transportband (18) umfaßt, das im Bereich der Heftvorrichtung (14) über eine Umlenkwalze (20) umgelenkt wird.

17. Vorrichtung nach Anspruch 16, dadurch gekennzeichnet, daß die Umlenkwalze (20) koaxial mit dem Auflagerad oder den Auflagerädern angeordnet ist.

18. Vorrichtung nach Anspruch 17, dadurch gekennzeichnet, daß die Umlenkwalze (20) und die Auflageräder (28, 28') drehfest auf einer gemeinsamen Welle (30) angeordnet sind und einen im wesentlichen gleichen Durchmesser aufweisen.

19. Vorrichtung nach einem oder mehreren der voranstehenden Ansprüche, dadurch gekennzeichnet, daß die dem Ultraschallkopf (26, 26') zuführbare Energie einstellbar ist.

20. Vorrichtung nach einem oder mehreren der voranstehenden Ansprüche, dadurch gekennzeichnet, daß der Ultraschallkopf mit einer Frequenz antreibbar ist, bei der ein Schmelzen der thermoplastischen Beschichtung erfolgt.

21. Vorrichtung nach Anspruch 20, dadurch gekennzeichnet, daß der Ultraschallkopf (26, 26') mit einer Frequenz von beispielsweise 40 - 60 kHz antreibbar ist.

22. Vorrichtung nach einem oder mehreren der voranstehenden Ansprüche, dadurch gekennzeichnet, daß die Schwingungsamplitude des Ultraschallkopfes (26, 26') in Richtung zur Transportbahn mindestens 150 μm beträgt.

23. Vorrichtung nach einem oder mehreren der voranstehenden Ansprüche, dadurch gekennzeichnet, daß der mittlere Abstand zwischen dem Ultraschallkopf und der Auflage kleiner ist als die Dicke der ungepreßten Papierlagen.

FIG.1

FIG.2

FIG.3

EP 0 340 334 A2

FIG.4a    FIG.4b    FIG.4c